(19) Europäisches Patentamt
European Patent Office
Office européen des brevets

(11) **EP 3 741 639 A1**

(12) **EUROPEAN PATENT APPLICATION**
published in accordance with Art. 153(4) EPC

(43) Date of publication:
**25.11.2020 Bulletin 2020/48**

(51) Int Cl.:
**B60W 30/09** (2012.01)   **B60T 7/12** (2006.01)
**B60T 8/92** (2006.01)   **B60W 40/04** (2006.01)
**G08G 1/09** (2006.01)   **G08G 1/16** (2006.01)

(21) Application number: **19755055.1**

(22) Date of filing: **01.02.2019**

(86) International application number:
**PCT/JP2019/003718**

(87) International publication number:
**WO 2019/159725 (22.08.2019 Gazette 2019/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2018  JP 2018026636**

(71) Applicant: **MAZDA MOTOR CORPORATION**
**Hiroshima 730-8670 (JP)**

(72) Inventors:
• **OHMURA, Hiroshi**
  **Aki-gun, Hiroshima 730-8670 (JP)**
• **TACHIHATA, Tetsuya**
  **Aki-gun, Hiroshima 730-8670 (JP)**
• **NISHIJO, Yuma**
  **Aki-gun, Hiroshima 730-8670 (JP)**
• **AWANE, Rie**
  **Aki-gun, Hiroshima 730-8670 (JP)**
• **KATAYAMA, Shota**
  **Aki-gun, Hiroshima 730-8670 (JP)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **VEHICLE CONTROL DEVICE**

(57)   Provided is a vehicle control device (100) designed to control vehicle traveling, and includes: a surrounding vehicle detection part (10b) to detect a surrounding vehicle (3); a vehicle information receiving part (26) to receive information regarding a traveling state thereof; a speed distribution setting part (10d) to set a speed limit distribution (40) defining a permissible upper limit relative speed, around the surrounding vehicle; and a control part (10d) to control a speed and/or steering of an own vehicle (1) to satisfy the speed limit distribution set by the speed distribution setting part, wherein the speed distribution setting part is configured to set the speed limit distribution such that the speed limit distribution is different for when the information regarding the traveling state of the surrounding vehicle has been able to be acquired, and when no information has been able to be acquired.

FIG.2

**Description**

TECHNICAL FIELD

The present invention relates to a vehicle control device, and more particularly to a vehicle control device for controlling vehicle traveling.

BACKGROUND ART

In JP 2006-218935A (Patent Document 1), a vehicle traveling support device is described. In this vehicle traveling support device, while detecting an object in a traveling direction of an own vehicle, it is predicted whether a safe distance is ensured at the time of closest approach of the own vehicle to the detected object, wherein, when the safe distance is predicted to fail to be ensured, traveling support control is executed. Further, in this vehicle traveling support device, the orientation of the object is detected to set the safe distance according to the detected orientation.

However, the control by the vehicle traveling support device described in Patent Document 1 is merely aimed at avoiding collision. However, in a satiation where, during normal traveling, the own vehicle passes by or overtakes a preceding vehicle (parked vehicle), it is not enough to allow collision avoidance. That is, when passing by or overtaking a preceding vehicle (parked vehicle), it is necessary to maintain, with respect to the preceding vehicle (parked vehicle), a distance (clearance) enough to avoid giving a driver a feeling of insecurity.

In order to achieve this necessity, the applicant has developed a vehicle control device configured to set, around an object such as a preceding vehicle, a plurality of speed limit distributions defining respective different permissible upper limit relative speeds, and control the vehicle speed and/or steering of an own vehicle not to exceed the upper limits (PCT/JP2016/075233). By incorporating such a vehicle control device, it becomes possible to successfully obtain vehicle control allowing the own vehicle to maintain a sufficient distance (clearance) with respect to an object such as a preceding vehicle, even when the own vehicle passes by and overtakes the object, thereby less likely to give a driver a feeling of insecurity.

CITATION LIST

[Parent Document]

Patent Document 1: JP 2006-218935A

SUMMARY OF INVENTION

[Technical Problem]

However, even in the control of setting, around the object, a plurality of speed limit distributions defining respective different permissible upper limit relative speeds, when a preceding vehicle as the object makes a deceleration or makes a lane change, it can become difficult to maintain a sufficient distance between an own vehicle and the preceding vehicle. Thus, depending on a traveling state of the preceding vehicle, relatively sudden deceleration and/or steering are executed in the own vehicle so as to maintain the sufficient distance, thereby becoming likely to give the driver a feeling of insecurity or worsen vehicle ride comfort. On the other hand, if the control is configured to preliminarily keep a large distance with respect to the preceding vehicle so as to make it possible to cope with the situation where the preceding vehicle makes a deceleration or the like, with a sufficient temporal margin, there arises a problem that the distance becomes excessive, which irritates a driver.

It is therefore an object of the present invention to provide a vehicle control device capable of suppressing a situation where the behavior of a surrounding vehicle causes sudden deceleration and/or steering in an own vehicle, thereby giving a driver a feeling of insecurity or worsening vehicle ride comfort.

[Solution to Technical Problem]

In order to achieve the above object, the present invention provides a vehicle control device for controlling vehicle traveling. The vehicle control device comprises: a surrounding vehicle detection part configured to detect a surrounding vehicle traveling around an own vehicle; a vehicle information receiving part configured to receive, from the surrounding vehicle detected by the surrounding vehicle detection part, information regarding a traveling state of the detected surrounding vehicle; a speed distribution setting part configured to set a speed limit distribution defining a permissible upper limit relative speed, around the surrounding vehicle detected by the surrounding vehicle detection part; and a control part configured to control a speed and/or steering of the own vehicle to satisfy the speed limit distribution set by the speed distribution setting part, wherein the speed distribution setting part is configured to set the speed limit distribution such that the speed limit distribution is different for when the information regarding the traveling state of the surrounding vehicle has been able to be acquired via the vehicle information receiving part, and when no information regarding the traveling state of the surrounding vehicle has been able to be acquired via the vehicle information receiving part.

In the vehicle control device of the present invention having the above feature, the surrounding vehicle detection part operates to detect a surrounding vehicle traveling around an own vehicle, and the vehicle information receiving part operates to receive, from the surrounding vehicle detected by the surrounding vehicle detection part, information regarding a traveling state of the detected surrounding vehicle. The speed distribution setting part operates to set a speed limit distribution defining a permissible upper limit relative speed, around the surrounding vehicle detected by the surrounding vehicle detection part, wherein the speed distribution setting part operates to set the speed limit distribution such that the pattern of the speed limit distribution becomes different between when the information regarding the traveling state of the surrounding vehicle has been able to be acquired via the vehicle information receiving part, and when no information regarding the traveling state of the surrounding vehicle has been able to be acquired via the vehicle information receiving part. The control part operates to control a speed and/or steering of the own vehicle to satisfy the set speed limit distribution.

In order to allow the own vehicle to travel while maintaining an adequate distance with respect to the surrounding vehicle, the traveling state of the surrounding vehicle is acquired by a sensor such as a camera or a radar, and data acquired by the sensor is analyzed to control acceleration/deceleration and/or steering of the own vehicle. Here, a certain level of time lag inevitably occurs between a time point when the traveling state is acquired and a time point when the control of acceleration/deceleration, etc., is actually executed in the own vehicle. If this time lag is large, it is necessary to keep a large distance between the own vehicle and the surrounding vehicle. Meanwhile, there is a situation where the information regarding the traveling state of the surrounding vehicle can be directly received from the surrounding vehicle via the vehicle information receiving part such as an inter-vehicle communication system. In this situation, a time lag also occurs between a time point when the information is received and a time point when the control is actually executed. According to the above feature, the speed limit distribution is set such that the pattern thereof becomes different between when the information regarding the traveling state of the surrounding vehicle has been able to be acquired via the vehicle information receiving part, and when no information regarding the traveling state of the surrounding vehicle has been able to be acquired via the vehicle information receiving part. Thus, it is possible to adequately set the distance with respect to the surrounding vehicle, depending on an acquisition status of the traveling state of the surrounding vehicle.

Preferably, in the vehicle control device of the present invention, the speed distribution setting part is configured to lower a speed limit in the speed limit distribution, when no information regarding the traveling state of the surrounding vehicle has been able to be acquired via the vehicle information receiving part.

Generally, when the control is executed based on the sensor data in a situation where no information regarding the traveling state of the surrounding vehicle has been able to be acquired, the time lag becomes larger. According to the above feature, the speed limit in the speed limit distribution is lowered when no information regarding the traveling state has been able to be acquired via the vehicle information receiving part, and thereby a distance between the own vehicle and the surrounding vehicle required with respect to the same relative speed is increased. This makes it possible to, even in the situation where the information cannot be received from the surrounding vehicle, cope with the behavior of the surrounding vehicle with a temporal margin, thereby reducing a feeling of insecurity to be given to a driver of the own vehicle.

Preferably, in the vehicle control device of the present invention, the vehicle information receiving part is configured to receive, as the information regarding the traveling state, manipulation information regarding manipulations for acceleration/deceleration and/or steering by a driver of the surrounding vehicle.

According to this feature, as the information regarding the traveling state, manipulation information regarding manipulations for acceleration/deceleration and/or steering by a driver of the surrounding vehicle is received from the surrounding vehicle, so that it is possible to quickly cope with deceleration or the like of a surrounding vehicle traveling forward of the own vehicle, and maintain an adequate distance with respect to the surrounding vehicle, with a temporal margin.

Preferably, in the vehicle control device of the present invention, the vehicle information receiving part is configured to receive, as the information regarding the traveling state, traveling course information regarding a subsequent traveling course of the surrounding vehicle.

According to this feature, as the information regarding the traveling state, traveling course information regarding a subsequent traveling course of the surrounding vehicle is received from the surrounding vehicle, so that it is possible to quickly cope with lane change or the like of a surrounding vehicle traveling forward of the own vehicle, and maintain an adequate distance with respect to the surrounding vehicle, with a temporal margin.

[Effect of Invention]

The vehicle control device of the present invention can suppress a situation where the behavior of a surrounding vehicle causes sudden deceleration and/or steering in the own vehicle, thereby giving a driver a feeling of insecurity or worsening vehicle ride comfort.

BRIEF DESCRIPTION OF DRAWINGS

FIG. 1 is a configuration diagram of a vehicle control device according to one embodiment of the present invention.
FIG. 2 is a control block diagram of the vehicle control device according to this embodiment.
FIG. 3 is an explanatory diagram of a first target traveling course to be set by the vehicle control device according to this embodiment.
FIG. 4 is an explanatory diagram of a second target traveling course to be set by the vehicle control device according to this embodiment.
FIG. 5 is an explanatory diagram of a third target traveling course to be set by the vehicle control device according to this embodiment.
FIG. 6 is an explanatory diagram of obstacle avoidance based on correction of a target traveling course in the vehicle control device according to this embodiment.
FIG. 7 is an explanatory diagram showing a relationship between a permissible upper limit relative speed and a distance between a surrounding vehicle and an own vehicle during avoidance of the surrounding vehicle, in the vehicle control device according to this embodiment.
FIG. 8 is an explanatory diagram of a vehicle model in the vehicle control device according to this embodiment.
FIG. 9 is a flowchart of a driving support control processing routine in the vehicle control device according to this embodiment.
FIG. 10 is a flowchart of speed limit distribution setting processing in the vehicle control device according to this embodiment.
FIG. 11 illustrates a graph showing a change in the permissible upper limit relative speed, in a situation where no information has been able to be acquired from a surrounding vehicle, in the vehicle control device according to this embodiment.
FIG. 12 illustrates a diagram showing a change in speed limit distributions, in the situation where in the situation where no information has been able to be acquired from a surrounding vehicle, in the vehicle control device according to this embodiment.

DESCRIPTION OF EMBODIMENTS

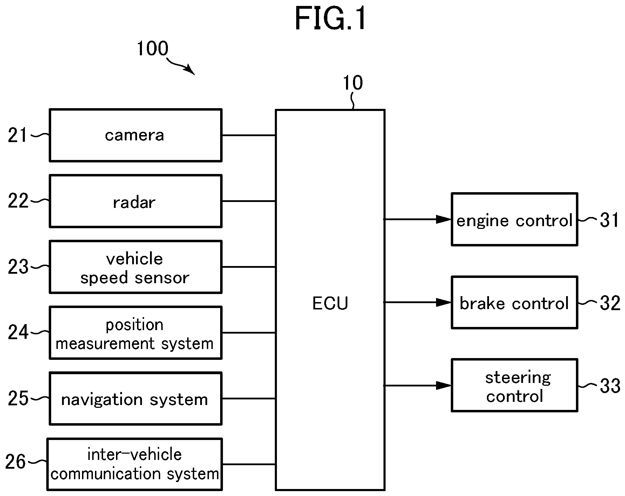

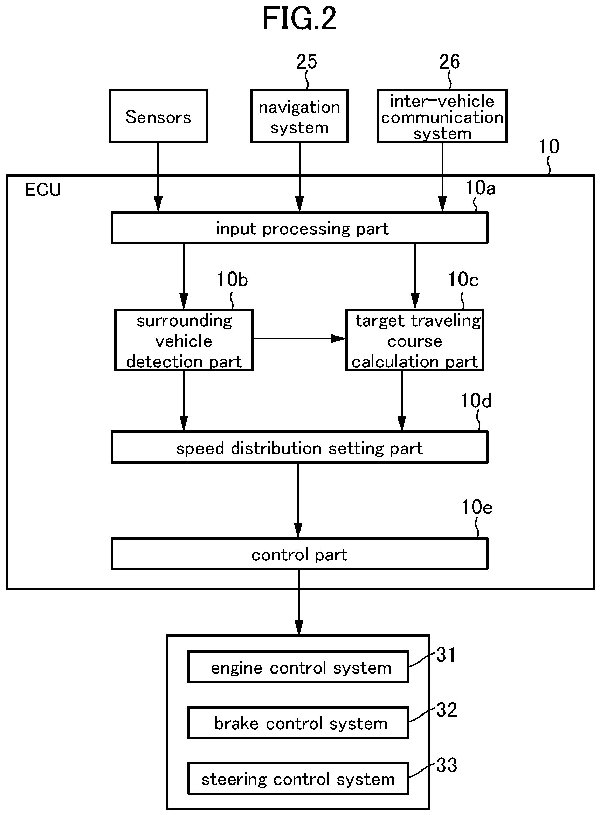

With reference to the accompanying drawings, a vehicle control device according to one embodiments of the present invention will now be described. First of all, with reference to FIGS. 1 and 2, the configuration of the vehicle control device will be described. FIG. 1 is a configuration diagram of the vehicle control device, and FIG. 2 is a control block diagram of the vehicle control device.

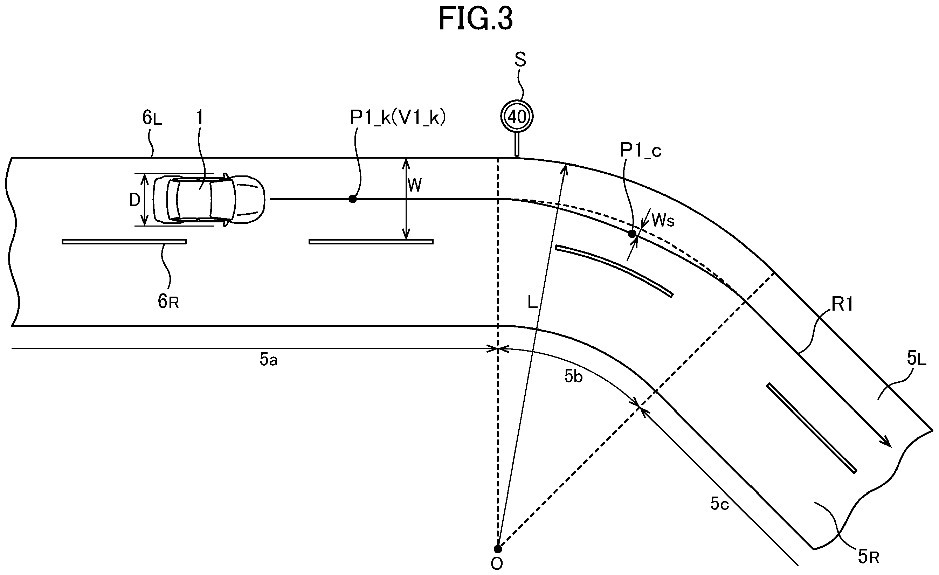

The vehicle control device 100 according to this embodiment is configured to provide, to a vehicle 1 (see FIG. 3, etc.) equipped with this device, various driving support controls each based on a respective one of a plurality of driving support modes. From among the plurality of driving support modes, a driver can select one desired driving support mode.

As shown in FIG. 1, the vehicle control device 100 comprises: a vehicle control and computing unit (ECU) 10, a plurality of sensors and switches, a plurality of control systems, and a driver manipulation unit (not shown) for allowing user input regarding the driving support modes, each equipped in the vehicle (own vehicle) 1. The sensors and switches include: a camera 21 for capturing an image of a vehicle exterior of the vehicle; a millimeter-wave radar 22; a vehicle speed sensor 23 for detecting the behavior of the vehicle; a position measurement system 24; a navigation system 25; and an inter-vehicle communication system 26. Further, the control systems include an engine control system 31, a brake control system 32 and a steering control system 33.

The ECU 10 illustrated in FIG. 1 is composed of a computer comprising a CPU, a memory storing therein various programs, and an input-output device. The ECU 10 is configured to be operable, based on a driving support mode selection signal and a setting vehicle speed signal received from the driver manipulation unit, and signals received from the sensors and switches, to output request signals for appropriately operating an engine system, a brake system and a steering system, respectively, to the engine control system 31, the brake control system 32 and the steering control system 33.

The camera 21 is configured to capture an image forward of the vehicle 1 and output captured image data.

The ECU 10 is operable to identify an object (e.g., a vehicle, a pedestrian, a road, a demarcation line (a lane border line, a white road line or a yellow road line), a traffic light, a traffic sign, a stop line, an intersection, an obstacle or the like) based on the image data. Additionally, it is possible to provide a vehicle exterior camera for capturing an image laterally outward or rearward of the vehicle 1. The vehicle may also be equipped with a vehicle interior camera for capturing an image of the driver during driving of the vehicle.

The millimeter-wave radar 22 is a measurement device for measuring the position and speed of the object (particularly, a preceding vehicle, a parked vehicle, a pedestrian, an obstacle or the like), and is configured to transmit a radio wave (transmitted wave) forwardly with respect to the vehicle 1 and receive a reflected wave produced as a result of reflection of the transmitted wave by the object. The millimeter-wave radar 22 is further configured to measure, based on the transmitted wave and the received wave, a distance between the vehicle 1 and the object, i.e., a vehicle-object distance, (e.g., inter-vehicle distance) and/or a relative speed of the object with respect to the vehicle 1. In this embodiment, as the millimeter-wave radar 22, there are provided a forward radar for detecting an object forward of the vehicle 1, a lateral radar for detecting an object laterally outward of the vehicle 1; and a rearward radar for detecting an object rearward of the vehicle 1. Here, a laser radar, an ultrasonic sensor or the like may be used, as a substitute for the millimeter-wave radar 22, to measure the distance and/or the relative speed with respect to the object. Further, the position and speed measurement device may be composed using a plurality of other sensors.

The vehicle speed sensor 23 is configured to detect an absolute speed of the vehicle 1.

The position measurement system 24 is composed of a GPS system and/or a gyro system, and is configured to detect the position of the vehicle 1 (current vehicle position information).

The navigation system 25 stores therein map information, and is configured to be operable to provide the map information to the ECU 10. Then, the ECU 10 is operable, based on the map information and the current vehicle position information, to identify a road, an intersection, a traffic light, a building and others existing around the vehicle 1 (particularly, forward of the vehicle 1 in its travelling direction). It is to be understood that the map information may be stored in the ECU 10.

The inter-vehicle communication system 26 is a vehicle-to-vehicle communication system, and is configured to exchange information about vehicle position, information about traveling speed, information about driver's manipulation for acceleration/deceleration, steering or the like, between the own vehicle and a surrounding vehicle traveling around the own vehicle. Through the use of the inter-vehicle communication system 26, it is possible to acquire information about the position, speed, driver's manipulation and others of a vehicle parked or traveling on a traveling course of the own vehicle with a relatively long distance therebetween.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output so as to obtain a target acceleration/deceleration.

The brake control system 32 comprises a controller for controlling a braking device of the vehicle 1. The ECU 10 is operable, when there is a need to decelerate the vehicle 1, to output, to the brake control system 32, a braking request signal for requesting to generate a braking force to be applied to the vehicle 1, so as to obtain the target acceleration/deceleration.

The steering control system 33 comprises a controller for controlling a steering device of the vehicle 1. The ECU 10 is operable, when there is a need to change the travelling direction of the vehicle 1, to output, to the steering control system 33, a steering direction change request signal for requesting to change a steering direction so as to obtain a target steering angle.

As shown in FIG. 2, the ECU 10 comprises a single CPU functioning as an input processing part 10a, a surrounding vehicle detection part 10b, a target traveling course calculation part 10c, a speed distribution setting part 10d, and a control part 10e. In this embodiment, the ECU 10 is configured such that the above functions are executed by the single CPU. Alternatively, the ECU may be configured such that the above functions are executed by a plurality of CPUs.

The input processing part 10a is configured to process input information from the vehicle exterior camera 20, other sensors and the driver manipulation unit 35. Specifically, the input processing part 10a functions as an image analysis part for analyzing an image of a traveling road captured by the camera 21 to detect a traveling lane in which the own vehicle is traveling (demarcation lines on opposed lateral sides of the lane).

The surrounding vehicle detection part 10b is configured to detect a surrounding vehicle traveling around the own vehicle, etc., based on input information from the millimeter-wave radar 22, the camera 21, the inter-vehicle communication system 26 and others.

The target traveling course calculation part 10c is configured to calculate a target traveling course of the own vehicle, based on input information from the millimeter-wave radar 22, the camera 21, the sensors and others.

The speed distribution setting part 10d is configured to set, around a surrounding vehicle, a speed limit distribution defining a permissible upper limit relative speed. For example, the speed distribution setting part 10d is operable, when a surrounding vehicle to be avoided is detected by the surrounding vehicle detection part 10b, to set a distribution line of a permissible upper limit relative speed at which the own vehicle 1 is permitted to travel with respect to the surrounding vehicle (speed limit distribution). Further, when an object other than a vehicle to be avoided is detected by the surrounding vehicle detection part 10b, the speed distribution setting part 10d is also operable to set a speed limit distribution around the detected object.

The control part 10e is configured to control the speed and steering of the own vehicle to satisfy the speed limit distribution which is a distribution line of a permissible upper limit relative speed at which the own vehicle is permitted to travel with respect to the surrounding vehicle. Specifically, the control part 10e is operable to correct the target traveling course calculated by the target traveling course calculation part 10c, to satisfy the speed limit distribution, thereby calculating a plurality of corrected traveling course candidates. Then, the control part 10e is operable to select, from among the corrected traveling course candidates satisfying the speed limit distribution, one or more corrected traveling course candidates satisfying a given limiting condition. Then, the control part 10e is operable, from among the selected one or more corrected traveling course candidates, to set, as an optimal corrected traveling course, a corrected traveling course candidate which is the smallest in terms of a given evaluation function. That is, the control part 10e is configured to calculate the corrected traveling course, based on the speed limit distribution, the given evaluation function and the given limiting condition. Here, in this embodiment, the limiting condition for determining an optimal corrected traveling course is appropriately set based on a currently selected one of the driving support modes, and a state of driving by a driver. It should be noted that the control part 10e may be configured to generate a traveling course satisfying the speed limit distribution, without using the limiting condition and the evaluation function.

Then, the control part 10e is operable to generate a request signal for allowing the own vehicle to travel along the determined optimal corrected traveling course, and output the generated request signal to one or more of at least the engine control system 31, the brake control system 32 and the steering control system 33.

Next, the driving support modes to be executed by the vehicle control device 100 according to this embodiment will be described. In this embodiment, the driving support modes consist of four modes. Specifically, the driving support modes consist of: a speed limiting mode which is a manual steering mode; a preceding vehicle following mode which is an automatic steering mode; an automatic speed control mode which is a manual steering mode; and a basic control mode which is to be executed when none of the above three driving support modes is selected.

< Preceding Vehicle Following Mode >

The preceding vehicle following mode is basically an automatic steering mode in which the vehicle 1 is controlled to travel following a preceding vehicle, while maintaining a given inter-vehicle distance between the vehicle 1 and the preceding vehicle, and involves steering control, speed control (engine control and/or brake control), and obstacle avoidance control (the speed control and the steering control) to be automatically executed by the vehicle control device 100.

In the preceding vehicle following mode, each of the steering control and the speed control is performed in different manners depending on detectability of opposed lane edges, and the presence or absence of a preceding vehicle. Here, the term "opposed lane edges" means opposed edges (one of which is a demarcation line such as a white road line, a road edge, an edge stone, a median strip, a guardrail or the like) of a lane in which the vehicle 1 is traveling, i.e., borderlines with respect to, e.g., a neighboring lane and sidewalk. The input processing part 10a comprised in the ECU 10 is operable to detect the opposed lane edges from the image data captured by the camera 21. Alternatively, the input processing part 10a may be configured to detect the opposed lane edges from the map information of the navigation system 25. However, for example, in a situation where the vehicle 1 is traveling on the plain on which there is no traffic lane, instead of on a well-maintained road, or in a situation where reading of the image data from the camera 21 is bad, there is a possibility of failing to detect the opposed lane edges.

Further, in this embodiment, the ECU 10 is operable, when serving as a preceding vehicle detection part, to detect a preceding vehicle, based on the image data from the camera 21, and the measurement data from the forward radar comprised in the millimeter-wave radar 22. Specifically, the ECU 10 is operable to detect, as a preceding vehicle, a second vehicle which is traveling forward of the vehicle 1, based on the image data from the camera 21. Further, in this embodiment, the ECU 10 is operable, when the inter-vehicle distance between the vehicle 1 and the second vehicle is determined to be equal to or less than a given value (e.g., 400 to 500 m), based on the measurement data from the millimeter-wave radar 22, to detect the second vehicle as a preceding vehicle.

In a situation where, in the preceding vehicle following mode, a surrounding object to be avoided is detected by the input processing part 10a, the target traveling course is corrected to automatically avoid the obstacle (surrounding object), irrespective of the presence or absence of a preceding vehicle, and the detectability of opposed lane edges.

< Automatic Speed Control Mode >

The automatic speed control mode is a manual steering mode in which the speed control is performed such that the vehicle 1 maintains a given setup vehicle speed (constant speed) preliminarily set by the driver, and which involves the speed control (the engine control and/or the brake control) to be automatically executed by the vehicle control device 100, but does not involves the steering control. In this automatic speed control mode, although the vehicle 1 is controlled to travel while maintaining the setup vehicle speed, the driver can increase the vehicle speed beyond the setup vehicle speed by depressing an accelerator pedal. Further, when the driver performs brake manipulation, priority is given to the intent of the driver, and therefore the vehicle 1 is decelerated from the setup vehicle speed. Further, when the vehicle 1 catches up to a preceding vehicle, the speed control is performed such that the vehicle 1 follows the preceding vehicle while maintaining an inter-vehicle distance appropriate to a follow-up vehicle speed, and then when the preceding vehicle disappears, the speed control is performed such that the follow-up vehicle speed is returned to the setup vehicle speed.

< Speed Limiting Mode >

The speed limiting mode is a manual steering mode in which the speed control is performed to prevent the vehicle speed of the vehicle 1 from exceeding a speed limit (legal speed limit) designated by a speed sign, or the setup vehicle speed set by the driver, and which involves the speed control (engine control) to be automatically executed by the vehicle control device 100. With regard to the speed limit, the ECU 10 may be configured to subject image data about an image of a speed sign or a speed marking on a road surface captured by the camera 21, to image recognition processing, to identify the legal speed limit, or may be configured to receive information regarding the speed limit from the outside via a wireless communication. In the speed limiting mode, even when the driver depresses the accelerator pedal so as to increase the vehicle speed beyond the speed limit or the setup vehicle speed, the vehicle speed of the vehicle 1 is increased only up to the speed limit or the setup vehicle speed.

< Basic Control Mode >

The basic control mode is a mode (off mode) in which none of the above three driving support modes is selected, and the steering control and speed control are not automatically executed by the vehicle control device 100. However, in a situation where there is a possibility that the vehicle 1 collides with a surrounding vehicle such as an oncoming vehicle or the like, collision avoidance control is executed. It should be noted that this avoidance control is executed in the preceding vehicle following mode, the automatic speed control mode and the speed limiting mode, in the same manner.

Next, with reference to FIGS. 3 to 5, a plural of traveling courses to be computed by the vehicle control device 100 according to this embodiment will be described. FIGS. 3 to 5 are explanatory diagrams of first to third traveling courses, respectively. In this embodiment, the target traveling course calculation part 10c comprised in the ECU 10 is configured to compute the first to third traveling courses R1 to R3 temporally repeatedly (e.g., at intervals of 0.1 sec). In this embodiment, the ECU 10 is operable, based on information from the sensors and others, to compute a traveling course in a time period from the present time through until a given time period (e.g., 3 sec) elapses. The traveling course Rx (where x = 1, 2, 3) is defined by a target position ($Px\_k$) and a target speed ($Vx\_k$) (where k = 0, 1, 2, - - -, n) of the vehicle 1 on the traveling course. Further, at each of the target positions, target values of a plurality of variables (acceleration, acceleration change rate, yaw rate, steering angle, vehicle angle, etc.) are specified in addition to the target speed.

Each of the traveling courses (first to third traveling courses) in FIGS. 3 to 5 is computed based on the shape of a traveling road on which the vehicle 1 is traveling, a traveling trajectory of a preceding vehicle, the traveling behavior of the vehicle 1, and the setup vehicle speed, without taking into account surrounding object detection information regarding an object (an obstacle such as a surrounding vehicle or a pedestrian) on the traveling road or around the traveling road. Thus, in this embodiment, each of the traveling courses is computed without taking into account information about surrounding objects, so that it is possible to keep down the overall computational load of these traveling courses.

For the sake of facilitating understanding, the following description will be made based on an example in which each of the traveling courses is computed on the assumption that the vehicle 1 travels on a road 5 consisting of a straight section 5a, a curve section 5b, a straight section 5c. The road 5 comprises left and right lanes 5L, 5R. Assume that, at the present time, the vehicle 1 travels on the lane 5L in the straight section 5a.

(First Traveling Course)

As shown in FIG. 3, the first traveling course R1 is set, by a distance corresponding to a given time period, to allow the vehicle 1 to maintain traveling in the lane 5L serving as the traveling road, in conformity to the shape of the road 5. Specifically, the first traveling course R1 is set, in each of the straight sections 5a, 5c, to allow the vehicle 1 to maintain traveling along approximately the widthwise middle of the lane 5L, and set, in the curve section 5b, to allow the vehicle 1 to travel on an inner side or in-side (on the side of a center O of a curvature radius L of the curve section 5b) with respect to the widthwise middle of the lane 5L.

The target traveling course calculation part 10c is operable to execute the image recognition processing for image data about the surroundings of the vehicle 1, captured by the camera 21, to detect opposed lane edges 6L, 6R. The opposed lane edges are, e.g., a demarcation line (white road line or the like), and a road shoulder, as mentioned above. Further, the target traveling course calculation part 10c is operable, based on the detected opposed lane edges 6L, 6R, to calculate a lane width W of the lane 5L and the curvature radius L in the curve section 5b. Alternatively, the target traveling course calculation part 10c may be configured to acquire the lane width W and the curvature radius L from the map information of the navigation system 25. Further, the target traveling course calculation part 10c is operable to read, from the image data, a speed limit indicated by a speed sign S or on the road surface. Alternatively, the target traveling course calculation part 10c may be configured to acquire the speed limit from the outside via a wireless communication, as mentioned above.

With regard to the straight sections 5a, 5c, the target traveling course calculation part 10c is operable to set a plurality of target positions $P1\_k$ of the first traveling course R1 to allow a vehicle width directional center (e.g., the position of the center of gravity) of the vehicle 1 to pass through the widthwise middle between the opposed lane edges 6L, 6R.

On the other hand, with regard to the curve section 5b, the target traveling course calculation part 10c is operable to maximally set a displacement amount Ws toward the in-side from the widthwise middle position of the lane 5L at a longitudinal middle position $P1\_c$ of the curve section 5b. This displacement amount Ws is computed based on the curvature radius L, the lane width W, and a width dimension D of the vehicle 1 (prescribed values stored in the memory of the ECU 10). Then, the target traveling course calculation part 10c is operable to set the plurality of target positions $P1\_k$ of the first traveling course R1 in such a manner as to smoothly connect the longitudinal middle position $P1\_c$ of the curve section 5b to the widthwise middle position of each of the straight sections 5a, 5b. Here, it should be understood that the first traveling course R1 may also be offset toward the in-side in the straight sections 5a, 5c at positions just before entering the curve section 5b and just after exiting the curve section 5b.

Basically, a target speed $V1\_k$ at each of the target positions $P1\_k$ of the first traveling course R1 is set to a given setup vehicle speed (constant speed) set by the driver or preliminarily set by the vehicle control device 100. However, when this setup vehicle speed exceeds a speed limit acquired from a speed sign S or the like, or a speed limit determined according to the curvature radius L of the curve section 5b, the target speed $V1\_k$ at each of the target positions $P1\_k$ on the traveling course is limited to a lower one of the two speed limits. Further, the target traveling course calculation part 10c is operable to appropriately correct the target positions $P1\_k$ and the target speed $V1\_k$, according to a current behavior state (i.e., vehicle speed, acceleration, yaw rate, steering angle, lateral acceleration, etc.) of the vehicle 1. For example, when a current value of the vehicle speed is largely different from the setup vehicle speed, the target speed is corrected so as to allow the vehicle speed to come close to the setup vehicle speed.

(Second Traveling Course)

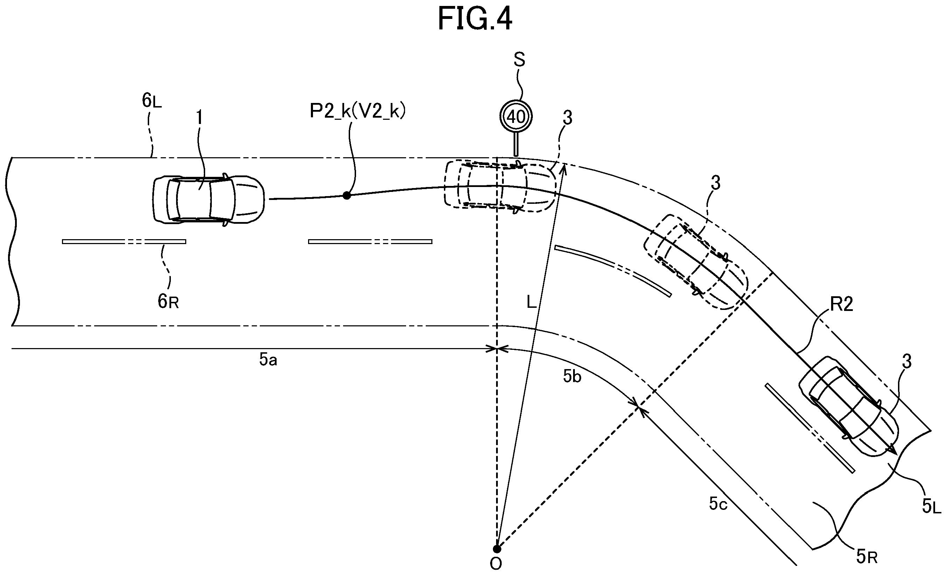

As shown in FIG. 4, the second traveling course R2 is set, by a distance corresponding to a given time period, to allow the vehicle 1 to follow a traveling trajectory of a preceding vehicle 3. The target traveling course calculation part 10c is operable to continuously compute the position and speed of the preceding vehicle 3 in the lane 5L in which the vehicle 1 is traveling, based on the image data from the camera 21, the measurement data from the millimeter-wave radar 22, and the vehicle speed of the vehicle 1 from the vehicle speed sensor 23, and store the calculated position and speed as preceding vehicle trajectory information, and, based on the preceding vehicle trajectory information, to set the traveling trajectory of the preceding vehicle 3 as the second traveling course R2 (target positions $P2\_k$ and target speeds $V2\_k$).

(Third Traveling Course)

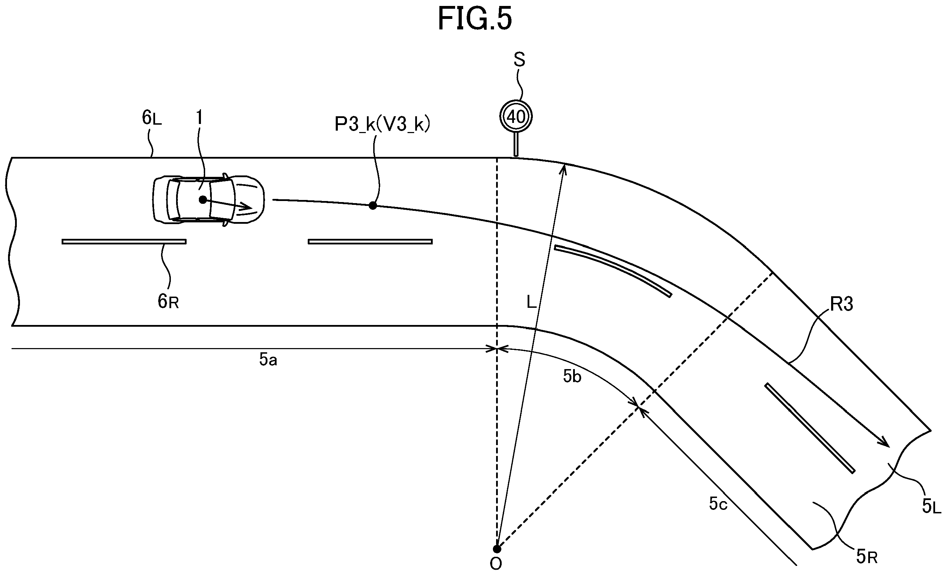

As shown in FIG. 5, the third traveling course R3 is set, by a distance corresponding to a given time period, based on a current driving state of the vehicle 1 by the driver. Specifically, the third traveling course R3 is set based on a position and a speed estimated from a current traveling behavior of the vehicle 1.

The target traveling course calculation part 10c is operable, based on the steering angle, the yaw rate and the lateral acceleration of the vehicle 1, to compute target positions $P3\_k$ of the third traveling course R3 having the distance corresponding to the given time period. However, in the situation where the opposed lane edges are detected, the target traveling course calculation part 10c is operable to correct the target positions $P3\_k$ such that the computed third traveling course R3 does not come close to or intersect with any of the lane edges.

Further, the target traveling course calculation part 10c is operable, based on current values of the vehicle speed and the acceleration of the vehicle 1, to compute a target speed $V3\_k$ of the third traveling course R3 having the distance corresponding to the given time period. Here, when the target speed $V3\_k$ exceeds the speed limit acquired from the speed sign S or the like, the target speed $V3\_k$ may be corrected in such a manner as to avoid exceeding the speed limit.

Next, a relationship between the driving support modes and the target traveling courses in the vehicle control device 100 will be described. In this embodiment, the vehicle control device 100 is configured such that, when the driver selects one of the driving support modes, one of the traveling courses is selected, as the target traveling course, according to the selected driving support mode.

When the preceding vehicle following mode is selected in a situation where opposed lane edges are detected, the first traveling course is used as the target traveling course, irrespective of the presence or absence of a preceding vehicle. In this case, the setup vehicle speed is used as the target speed.

On the other hand, when the preceding vehicle following mode is selected in a situation where no opposed lane edges are detected, but a preceding vehicle is detected, the second traveling course is used as the target traveling course. In this case, the target speed is set according to the vehicle speed of the preceding vehicle. Further, when the preceding vehicle following mode is selected in a situation where neither opposed lane edges nor a preceding vehicle is detected, the third traveling course is used as the target traveling course.

When the automatic speed control mode is selected, the third traveling course is used as the target traveling course. In the automatic speed control mode in which the speed control is automatically executed as mentioned above, the setup speed is used as the target speed. Further, the driver manually controls steering by manipulating a steering wheel.

When the speed limiting mode is selected, the third traveling course is also used as the target traveling course. In the speed limiting mode in which the speed control is automatically executed as mentioned above, the target speed is set according to a depression amount of the accelerator pedal manipulated by the driver, within the speed limit. Further, the driver manually controls steering by manipulating the steering wheel.

When the basic control mode (off mode) is selected, the third traveling course is used as the target traveling course. The basic control mode is basically the same as the speed limiting mode in a state in which no speed limit is set.

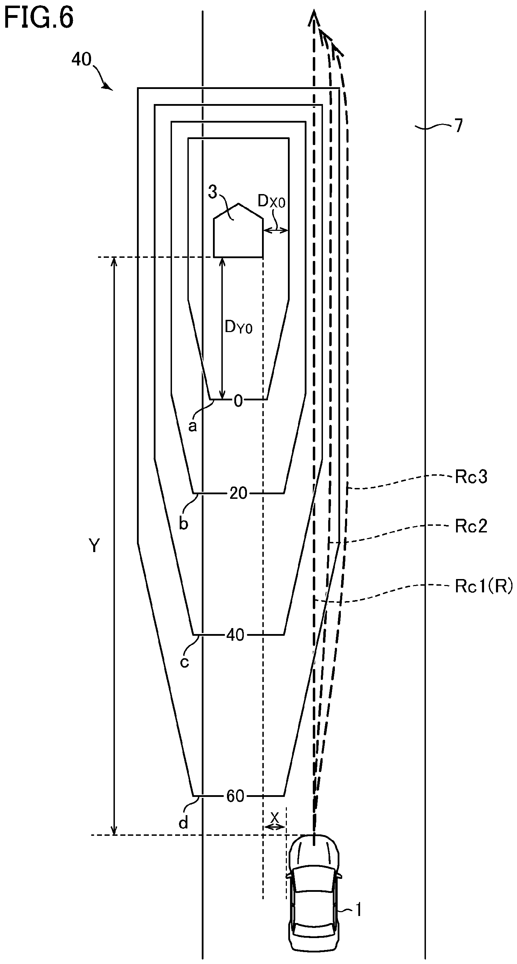

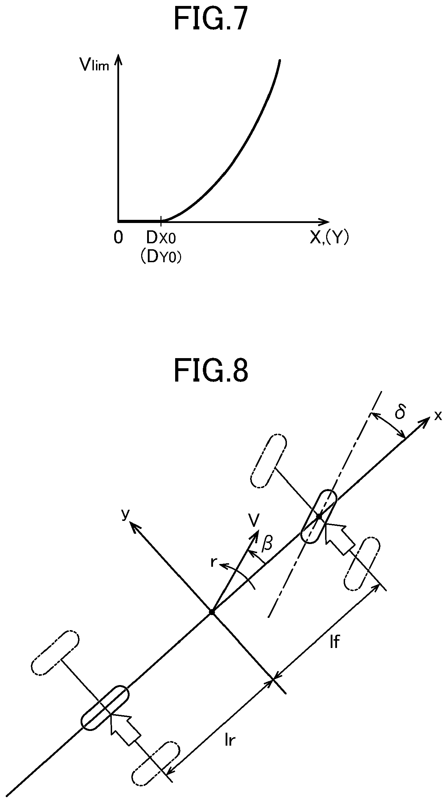

Next, with respect to FIGS. 6 to 8, traveling course correction processing to be executed by the control part 10e of the ECU in the vehicle control device 100 according to this embodiment will be described. FIG. 6 is an explanatory diagram of obstacle avoidance by correction of the target traveling course. FIG. 7 is an explanatory diagram showing a relationship between the permissible upper limit relative speed and a distance between a surrounding vehicle and an own vehicle during avoidance of the surrounding vehicle. FIG. 8 is an explanatory diagram of a vehicle model.

In FIG. 6, the vehicle 1 is traveling on a traveling road (lane) 7, and is just about passing by a traveling or parked vehicle 3 (surrounding vehicle) and overtaking the vehicle 3.

Generally, when passing by (or overtaking) an obstacle (e.g., a preceding vehicle, a parked vehicle, or a pedestrian) on or near a road, a driver of the vehicle 1 keeps a given clearance or distance (lateral distance) between the vehicle 1 and the obstacle in a lateral direction orthogonal to the traveling direction of the vehicle 1, and reduces the vehicle speed to a value the driver of the vehicle 1 feels safe. Specifically, in order to avoid dangers such as a situation where a preceding vehicle suddenly changes a course, a situation where a pedestrian comes out from a blind spot due to the obstacle, and a situation where a door of a parked vehicle is suddenly opened, the relative speed with respect to the obstacle is set to a lower value as the clearance becomes smaller.

Further, generally, when the vehicle 1 is approaching a preceding vehicle from behind the preceding vehicle, the driver of the vehicle 1 adjusts the vehicle speed (relative speed) according to the inter-vehicle distance (longitudinal distance) along the travelling direction. Specifically, when the inter-vehicle distance is relatively large, an approaching speed (relative speed) is maintained relatively high. However, when the inter-vehicle distance becomes relatively small, the approaching speed is set to a lower value. Subsequently, at a given inter-vehicle distance, the relative speed between the two vehicles is set to zero. This action is the same even when the preceding vehicle is a parked vehicle.

As above, the driver drives the vehicle 1 in such a manner as to avoid dangers while taking into account a relationship between the distance (including the lateral distance and the longitudinal distance) from the vehicle 1 to an obstacle, and the relative speed therebetween.

Therefore, in this embodiment, as shown in FIG. 6, the vehicle 1 is configured to set a two-dimensional distribution (speed limit distribution 40) defining the permissible upper limit relative speed in the travelling direction of the vehicle 1 with respect to an obstacle (such as the parked vehicle 3) detected by the vehicle 1, around the obstacle (over laterally-outward, rearward and forward regions around the obstacle) or at least between the obstacle and the vehicle 1. In the speed distribution 40, the permissible upper limit relative speed $V_{lim}$ is set at each point around the obstacle. In this regard, the speed distribution setting part 10d is operable to set a plurality of speed limit distributions 40 according to a distance from the surrounding vehicle 3. In this embodiment, in all the driving support modes, traveling course correction processing is executed to prevent the relative speed of the vehicle 1 with respect to the obstacle from exceeding the permissible upper limit relative speed $V_{lim}$ in each of the speed limit distributions 40. Further, as mentioned in detail later, when the obstacle is a surrounding vehicle, the speed limit distributions 40 are set around the obstacle differently depending on information received from the surrounding vehicle via the inter-vehicle communication system 26.

As can be understood from FIG. 6, in the speed limit distributions 40, the permissible upper limit relative speed is set such that it becomes smaller as the lateral distance and the longitudinal distance from the obstacle become smaller (as the vehicle 1 approaches the obstacle more closely). Specifically, the speed limit distributions 40 are set as a plurality of (in this example, four) constant relative speed lines each connecting the same upper limits. The constant relative speed lines a, b, c, d represent, respectively, to the speed limit distributions 40 in which the permissible upper limit relative speed $V_{lim}$ is 0 km/h, 20 km/h, 40 km/h and 60 km/h. In this example, each of the speed limit distributions 40 is set to have an approximately rectangular shape. In this regard, the speed distribution setting part 10d is operable, when an obstacle (surrounding object) to be avoided is recognized by the input processing part 10a, to set the speed limit distributions 40 each of which is a distribution line of a permissible upper limit relative speed at which the own vehicle is permitted to travel with respect to the obstacle. Then, the control part 10e is operable to correct the target traveling course calculated by the target traveling course calculation part 10c, in such a manner as to satisfy the speed limit distributions 40.

Here, the speed limit distributions 40 do not necessarily have to be set over the entire circumference of the obstacle, but may be set at least in a region rearward of the obstacle and on one (in FIG. 6, right side) of opposite lateral sides of the obstacle on which the vehicle 1 exists. Further, the speed limit distributions 40 may be set to have a unsymmetrical shape.

As shown in FIG. 7, when the vehicle 1 travels at a certain relative speed with respect to an obstacle (in the example illustrated in FIG. 6, the vehicle 3 as the obstacle is parked, and therefore the relative speed is equal to the absolute speed of the vehicle 1), the permissible upper limit relative speed $V_{lim}$ is set such that it quadratically increases with respect to a distance from the obstacle. That is, with respect to a lateral clearance X from the obstacle, the permissible upper limit relative speed $V_{lim}$ is set by the following formula (1):

$$V_{lim} = \alpha\, k_1\, (X - D_{X0})^2 \qquad (X \geq D_{X0}) \qquad\qquad (1)$$

$$V_{lim} = 0 \qquad\qquad (X < D_{X0})$$

In the formula (1), $k_1$ denotes a gain coefficient related to the degree of change of $V_{lim}$ with respect to the lateral clearance X, and is set depending on the type of obstacle and the like. A safe distance $D_{X0}$ can also be set depending on the type of obstacle and the like. As one example, in this embodiment, the safe distance $D_{X0}$ is set to 0.2 [m]. Further, a correction coefficient $\alpha$ is a coefficient to be used when the obstacle is a surrounding vehicle, wherein it is changed according to information received from the surrounding vehicle via the inter-vehicle communication system 26, such as manipulation information regarding manipulations by a driver of the surrounding vehicle. Setting of the correction coefficient $\alpha$ will be described later.

Further, as shown in the formula (1), , in the lateral direction of the obstacle, the permissible upper limit relative speed $V_{lim}$ is kept at 0 (zero) km/h until the lateral clearance X reaches the safe distance $D_{X0}$, and quadratically increases when the lateral clearance X becomes equal to or greater than the safe distance $D_{X0}$. That is, in order to ensure safety, when the lateral clearance X is less than the safe distance $D_{X0}$, the relative speed to be permitted for the vehicle 1 is set to zero. On the other hand, when the lateral clearance X is equal to or greater than the safe distance $D_{X0}$, the vehicle 1 is permitted to pass by the obstacle at a relatively large relative speed.

Further, in the longitudinal direction of the obstacle (the travelling direction of the vehicle 1), the permissible upper limit relative speed $V_{lim}$ [km/h] is set, with respect to a traveling directional distance Y to the obstacle, by the following formula (2):

$$V_{lim} = \beta\, k_2\, (Y - D_{Y0})^2 / Vs \qquad (Y \geq D_{Y0}) \qquad\qquad (2)$$

$$V_{lim} = 0 \qquad\qquad (Y < D_{Y0})$$

In the formula (2), Vs [km/h] denotes a traveling speed of the own vehicle 1, and $k_2$ denotes a gain coefficient related to the degree of change of $V_{lim}$ with respect to the traveling directional distance Y (distance to the obstacle), and is set depending on the type of obstacle and the like. A safe distance $D_{Y0}$ can also be set depending on the type of obstacle and the like. As one example, in this embodiment, the safe distance $D_{Y0}$ is set to 2 [m]. Further, correction coefficient $\beta$ is coefficient to be used when the obstacle is a surrounding vehicle, wherein it is changed according to information received from the surrounding vehicle via the inter-vehicle communication system 26, such as manipulation information regarding manipulations by the driver of the surrounding vehicle. Setting of the correction coefficient $\beta$ will be described later.

As expressed in the formula (2), in the traveling direction (longitudinal direction) of the own vehicle, the permissible upper limit relative speed $V_{lim}$ is kept at 0 (zero) km/h until the longitudinal distance Y reaches the safe distance $D_{Y0}$, and quadratically increases when the longitudinal distance Y becomes equal to or greater than the safe distance

$D_{Y0}$. That is, in order to ensure safety, when the longitudinal distance Y to the obstacle is less than the safe distance $D_{Y0}$, the relative speed to be permitted for the vehicle 1 is set to zero. On the other hand, when the longitudinal distance Y is equal to or greater than the safe distance $D_{Y0}$, the vehicle 1 is permitted to approach the obstacle at a relatively large relative speed. Further, in the longitudinal direction, the permissible upper limit relative speed $V_{lim}$ is set to be inversely proportional to the traveling speed Vs of the own vehicle 1. That is, considering that a braking distance of the own vehicle 1 becomes longer as the traveling speed Vs of the own vehicle 1 becomes higher, the permissible upper limit relative speed $V_{lim}$ is set to become lower as the traveling speed Vs of the own vehicle 1 becomes higher. Thus, the permissible upper limit relative speed $V_{lim}$ for the same longitudinal distance Y becomes lower as the traveling speed Vs of the own vehicle 1 becomes higher.

In this embodiment, $V_{lim}$ in each of the lateral and longitudinal directions is defined as a quadratic function. Alternatively, $V_{lim}$ may be defined as another function (e.g., a linear function). Further, the permissible upper limit relative speed $V_{lim}$ in the lateral direction of the obstacle and the permissible upper limit relative speed $V_{lim}$ in a region rearward of the obstacle have been described with reference to FIG. 7. However, the permissible upper limit relative speed $V_{lim}$ may be set in every radial directions including a longitudinal direction in a region forward of the obstacle. In this case, the coefficient k and the safe distance $D_0$ may be set depending on a direction from the obstacle.

The speed limit distributions 40 can be set based on various parameters. Examples of the parameter may include the relative speed between the vehicle 1 and the obstacle, the type of the obstacle, the traveling direction of the vehicle 1, a moving direction and a moving speed of the obstacle, the length of the obstacle, and the absolute speed of the vehicle 1. That is, based on these parameters, the coefficient k and the safe distance $D_0$ can be selected.

In this embodiment, the obstacle includes a vehicle, a pedestrian, a bicycle, a cliff, a trench, a hole and a fallen object. The vehicle can be classified into a passenger vehicle, a truck, and a motorcycle. The pedestrian can be classified into an adult, a child and a group.

As shown in FIG. 6, when the vehicle 1 is traveling on the traveling road 7, the input processing part 10a comprised in the ECU 10 of the vehicle 1 operates to detect an obstacle (vehicle 3) based on the image data from the camera 21. At this moment, the type of the obstacle (in this example, a vehicle or a pedestrian) is identified.

Further, the input processing part 10a operates to calculate the position and the relative speed of the obstacle (vehicle 3) with respect to the vehicle 1, and the absolute speed of the obstacle, based on the measurement data from the millimeter-wave radar 22 and vehicle speed data from the vehicle speed sensor 23. Here, the position of the obstacle includes a y-directional position (longitudinal distance) along the traveling direction of the vehicle 1, and an x-directional position (lateral distance) along the lateral direction orthogonal to the traveling direction.

The speed distribution setting part 10d comprised in the ECU 10 operates to set the speed limit distributions 40 with respect to each of one or more detected obstacles (in FIG. 6, the vehicle 3). Then, the control part 10e operates to correct a traveling course to prevent the speed of the vehicle 1 from exceeding the upper limits $V_{lim}$ in the speed limit distributions 40. That is, along with avoidance of the obstacle, the control part 10e operates to correct the target traveling course determined according to the driving support mode selected by the driver.

Specifically, in a situation where, if the vehicle 1 travels along the target traveling course, the target speed exceeds, at a certain target position, the permissible upper limit relative speed defined in one of the speed distributions 40, the target speed is reduced without changing the target positions (course Rc1 in FIG. 6), or the target positions are changed to points on a bypass course so as to allow the target speed to avoid exceeding the permissible upper limit relative speed (course Rc3 in FIG. 6) or both the target positions and the target speed are changed (course Rc2 in FIG. 6).

For example, FIG. 6 shows a case where the computed target traveling course R is a course which is set such that the vehicle 1 travels along the widthwise middle of the traveling road 7 (target positions) at 60 km/h (target speed). In this case, the parked vehicle 3 as the obstacle exists forward of the vehicle 1. However, in the stage of computing the target traveling course R, this obstacle is not taken into account to reduce the computational load, as mentioned above.

If the vehicle 1 travels along the target traveling course R, it will cut across the constant relative speed lines d, c, c, d of the speed limit distributions 40, in this order. That is, the vehicle 1 traveling at 60 km/h enters a region inside the constant relative speed line d (permissible upper limit relative speed $V_{lim}$ = 60 km/h). Thus, the control part 10e operates to correct the target traveling course R so as to limit the target speed at each target position of the target traveling course R to the permissible upper limit relative speed $V_{lim}$ or less, thereby generating the post-correction target traveling course (corrected traveling course candidate) Rc1. Specifically, in the post-correction target traveling course Rc1, as the vehicle 1 approaches the vehicle 3, the target speed is reduced to become equal to or less than the permissible upper limit relative speed $V_{lim}$ at each target position, i.e., gradually reduced to less than 40 km/h, and then, as the vehicle 1 travels away from the vehicle 3, the target speed is gradually increased to 60 km/h as the original vehicle speed.

The post-correction target traveling course (corrected traveling course candidate) Rc3 is a course which is set such that the vehicle 1 travels outside the constant relative speed line d (which corresponds to a relative speed of 60 km/h), instead of changing the target speed (60 km/h) of the target traveling course R. In this case, the control part 10e operates to correct the target traveling course R such that the target positions are changed to points on or outside the constant relative speed line d, while maintain the target speed of the target traveling course R, thereby generating the post-correction target traveling course Rc3. Thus, the target speed of the post-correction target traveling course Rc3 is maintained at 60 km/h as the target speed of the target traveling course R.

The post-correction target traveling course (corrected traveling course candidate) Rc2 is a course set by changing both the target positions and the target speed of the target traveling course R. In the post-correction target traveling course Rc2, instead of maintaining the target speed at 60 km/h, the target speed is gradually reduced as the vehicle 1 approaches the vehicle 3, and then gradually increased to 60 km/h as the original vehicle speed, as the vehicle 1 travels away from the vehicle 3.

The correction to be achieved by changing only the target speed without changing the target positions of the target traveling course R, as in the post-correction target traveling course Rc1, can be applied to a driving support mode which involves the speed control but does not involve the steering control (e.g., the automatic speed control mode, the speed limiting mode, and the basic control mode).

Further, the correction to be achieved by changing only the target positions without changing the target speed of the target traveling course R, as in the post-correction target traveling course Rc3, can be applied to a driving support mode which involves the steering control (e.g., the preceding vehicle following mode).

Further, the correction to be achieved by changing both the target positions and the target speed of the target traveling course R, as in the post-correction target traveling course Rc2, can be applied to a driving support mode which involves the speed control and the steering control (e.g., the preceding vehicle following mode).

Subsequently, the control part 10e comprised in the ECU 10 operates to determine an optimal corrected traveling course from among the corrected traveling course candidates settable as a corrected traveling course, based on sensor information and others. Specifically, the control part 10e operates to determine an optimal corrected traveling course from among the corrected traveling course candidates, based on the given evaluation function and the given limiting condition.

The ECU10 stores the evaluation function J, the limiting condition and a vehicle model in the memory. For determining an optimal corrected traveling course, the control part 10e is operable to calculate, as the optimal corrected traveling course, one of the corrected traveling course candidates, which has an extreme value in terms of the evaluation function J, while satisfying the limiting condition and the vehicle model (optimization processing).

The evaluation function J has a plurality of evaluation factors. In this embodiment, the evaluation factors are a function for evaluating the adequacy of a plurality of corrected traveling course candidates obtained by correcting the target traveling course, in terms of, e.g., speed (longitudinal and lateral speeds), acceleration (longitudinal and lateral accelerations), acceleration change rate (longitudinal and lateral acceleration change rates), yaw rate, lateral offset with respect to the widthwise middle of a lane, vehicle angle, steering angle, and other software limitations.

The evaluation factors include an evaluation factor regarding a longitudinal behavior of the vehicle 1 (longitudinal evaluation factor: longitudinal speed, longitudinal acceleration, longitudinal acceleration change rate, etc.), and an evaluation factor regarding a lateral behavior of the vehicle 1 (lateral evaluation factor: lateral speed, lateral acceleration, lateral acceleration change rate, yaw rate, lateral offset with respect to the widthwise middle of a lane, vehicle angle, steering angle, etc.).

In this embodiment, the evaluation function J is expressed as the following formula:

$$J = \sum_{0}^{N} \left\{ W_1 \left( X_1 - X_{ref1} \right)^2 + W_2 \left( X_2 - X_{ref2} \right)^2 + \cdots + W_n \left( X_n - X_{refn} \right)^2 \right\}$$

In this formula, $W_k (X_k - X_{refk})^2$ denotes each of the evaluation factors, wherein: $X_k$ denotes a physical value of the corrected traveling course candidate in regard to each of the evaluation factors; $X_{refk}$ denotes a physical value of the target traveling course (before correction) in regard to a corresponding one of the evaluation factors; and $W_k$ denotes a weighting factor for the corresponding one of the evaluation factors (e.g., $0 \leq W_k \leq 1$) (where k is an integer of 1 to n). Thus, in this embodiment, the evaluation function J is equivalent to a value obtained by: calculating differences in respective physical amounts of n evaluation factors between a corrected traveling course candidate and a target traveling course (before correction); weighting respective square values of the differences; and summing the weighted values over a traveling course distance corresponding to a given time period N (e.g., N = 3 sec).

In this embodiment, the evaluation function J has a smaller value as a corrected traveling course candidate obtained by correcting the target traveling course has a higher evaluation. That is, among the plurality of corrected traveling course candidates, one corrected traveling course candidate having a minimum value in terms of the evaluation function J is calculated as an optimal corrected traveling course by the control part 10e.

The limiting condition is a condition to be satisfied by each of the corrected traveling course candidates. Thus, the corrected traveling course candidates to be evaluated can be narrowed down by the limiting condition, so that it is possible to reduce a computational load necessary for the optimization processing based on the evaluation function J, thereby shortening a computational time period.

The vehicle model is designed to define physical motions of the vehicle 1, and expressed as the following motion equations. In this embodiment, this vehicle model is a two-wheel vehicle model as shown in FIG. 8. The physical motions of the vehicle 1 can be defined by the vehicle model, so that it is possible to calculate a corrected traveling course which is less likely to give a driver a feeling of strangeness during traveling, and early converge the optimization processing based on the evaluation function J.

$$mV\left(\frac{d\beta}{dt} + r\right) = -2K_f\left(\beta + \frac{l_f}{V}r - \delta\right) - 2K_r\left(\beta - \frac{l_r}{V}r\right) \quad (3)$$

$$I\frac{dr}{dt} = -2K_f\left(\beta + \frac{l_f}{V}r - \delta\right)l_f + 2K_r\left(\beta - \frac{l_r}{V}r\right)l_r \quad (4)$$

In FIG. 8 and the equations (3) and (4), m denotes a mass of the vehicle 1; I denotes a yawing inertia moment of the vehicle 1; 1 denotes a wheelbase of the vehicle 1; $l_f$ denotes a distance between a center-of-gravity and a front axle of the vehicle 1; $l_r$ denotes a distance between the center-of-gravity and a rear axle of the vehicle 1; $K_f$ denotes a cornering power per front road wheel of the vehicle 1; $K_r$ denotes a cornering power per rear road wheel of the vehicle 1; V denotes a vehicle speed of the vehicle 1; $\delta$ denotes an actual steering angle of a front road wheel of the vehicle 1 ; $\beta$ denotes a lateral slip angle at the center-of-gravity; r denotes a yaw angular speed of the vehicle 1; $\theta$ denotes a yaw angle of the vehicle 1; y denotes a lateral displacement with respect to an absolute space; and t denotes time.

In this way, the control part 10e is operable, based on the target traveling course, the limiting condition, the vehicle model, etc., to calculate an optimal corrected traveling course which is the smallest in terms of the evaluation function J, from among the plurality of corrected traveling course candidates.

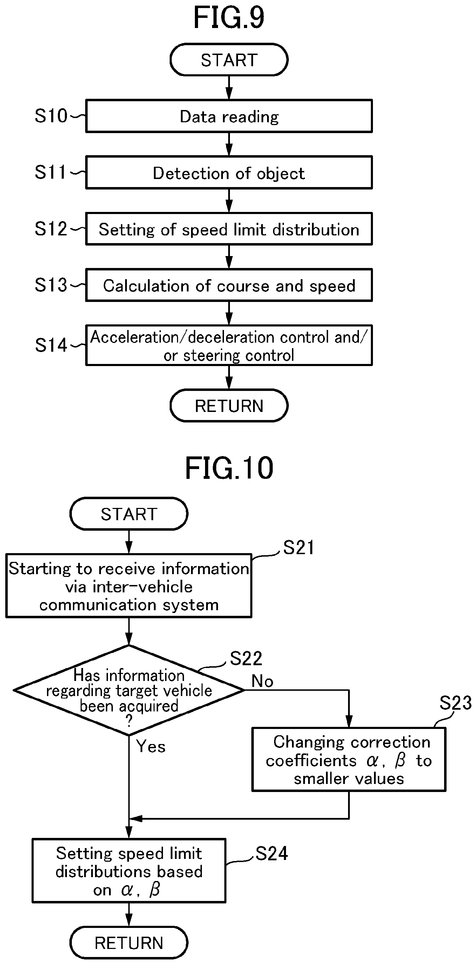

Next, with reference to FIGS. 9 to 12, a flow of vehicle control processing in the vehicle control device 100 according to this embodiment will be described. FIG. 9 is a flowchart of a driving support control processing routine, and FIG. 10 is a flowchart of speed limit distribution setting processing.

The ECU 10 operates to repeatedly execute a processing routine according to the flowchart in FIG. 9, at intervals of a given time period (e.g., 0.1 sec). First of all, the input processing part 10a of the ECU 10 operates, in step S10, to execute data reading as information acquisition processing. In the information acquisition processing, the ECU 10 operates to acquire the current vehicle position information, the map information, information regarding the surrounding object, and the like, from the position measurement system 24, the navigation system 25 and the inter-vehicle communication system 26, and acquire the sensor information from the camera 21, the millimeter-wave radar 22, the vehicle speed sensor 23 and others. Here, the ECU 10 may be configured to acquire additional sensor information from an acceleration sensor, a yaw rate sensor, the driver manipulation unit (which are not shown) and others. Further, the ECU 10 may be configured to acquire switch information from a steering angle sensor, an accelerator position sensor, a brake sensor (which are not shown) and others.

The ECU 10 also operates to detect vehicle manipulation information regarding vehicle manipulation by a driver (steering angle, accelerator pedal depression amount, a brake pedal depression amount, etc.) from the switch information, and further detect traveling behavior information regarding the behavior of the vehicle 1 (vehicle speed, longitudinal acceleration, lateral acceleration, yaw rate, etc.).

Here, information regarding a traveling state of the surrounding vehicle, received from the surrounding vehicle via the inter-vehicle communication system 26 includes manipulation information regarding manipulations for acceleration/deceleration and steering by a driver of the surrounding vehicle, such as a steering angle, an accelerator pedal depression amount, and a brake pedal depression amount. Thus, the inter-vehicle communication system 26 functions as a vehicle information receiving part configured to receive the manipulation information regarding manipulations by the driver of the surrounding vehicle. Further, in a case where the surrounding vehicle is equipped with a vehicle control device such as a driving support device or an automatic driving device, traveling course information regarding a traveling course in a time period subsequent to the present time is received via the inter-vehicle communication system 26, as the information regarding the traveling state of the surrounding vehicle 3 set in the vehicle control device of the surrounding vehicle 3.

Subsequently, the ECU 10 operates, in step S11, to execute given object detection processing, using the variety of information acquired through the information acquisition processing. In the object detection processing, the ECU 10 operates to detect, based on the current vehicle position information, the map information, the information from the inter-vehicle communication system 26 and the sensor information, traveling road information regarding the shape of a traveling road in areas around and forward of the vehicle 1 (the presence or absence of a straight section and a curve section, the length of each of the straight and curve sections, the curvature radius of the curve section, a lane width, the positions of opposed lane edges, the number of lanes, the presence or absence of an intersection, a speed limit determined by the curvature of the curve section, etc.), traveling regulation information (legal speed limit, red light, etc.), and the preceding vehicle trajectory information (traveling trajectory of a preceding vehicle). As the object detection processing, the surrounding vehicle detection part 10b of the ECU 10 operates to detect, based on the information from the inter-vehicle communication system 26 and the sensor information from the camera 21 and the like, surrounding object information regarding a surrounding object including a surrounding vehicle (the presence or absence, type, size, position, etc., of an obstacle on a traveling courser). Thus, the processings in the steps S10 and S11 serve as a manipulation information receiving step of detecting a surrounding vehicle traveling around the own vehicle, and receiving, from the detected surrounding vehicle, manipulation information regarding manipulations for acceleration/deceleration and/or steering by a driver of the surrounding vehicle 3, via the inter-vehicle communication system 26.

Subsequently, the speed distribution setting part 10d of the ECU 10 operates, in step S12, to execute speed limit distribution setting processing. Specifically, the speed distribution setting part 10d operates to set the speed limit distributions 40 illustrated in FIG. 6, around a surrounding object such as a surrounding vehicle detected in the step S11 by the surrounding vehicle detection part 10b. Thus, the processing in the step S12 serves as a speed distribution setting step of setting, around the surrounding vehicle 3, the speed limit distributions 40 each defining a permissible upper limit relative speed.

Subsequently, in step S13, the target traveling course calculation part 10c of the ECU 10 operates to calculate the target traveling courses illustrated in FIGS. 3 to 5, using the traveling road information detected in the step S11. Further, the control part 10e operates to correct a selected one of the calculated target traveling courses to satisfy the speed limit distributions 40, thereby calculating a corrected traveling course defining a traveling trajectory and a traveling speed appropriate to the traveling trajectory.

Subsequently, the control part 10e of the ECU 10 operates, in step S14, to output a request signal to each of one or more control systems concerned (the engine control system 31, the brake control system 32 and/or the steering control system 33) so as to allow the own vehicle to travel on the corrected traveling course calculated in the step S13. Specifically, the ECU 10 operates to generate a request signal according to a target control amount of each of the engine, brake and steering, determined by the calculated corrected traveling course, and output the generated request signal. Thus, the processings in the steps S13 and S14 serves as a control step of controlling speed and/or steering of the own vehicle to satisfy the set speed limit distributions.

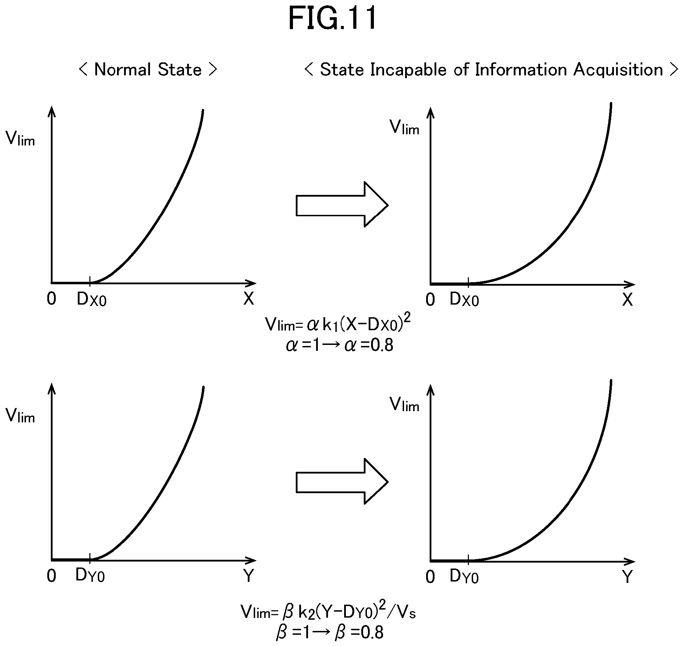

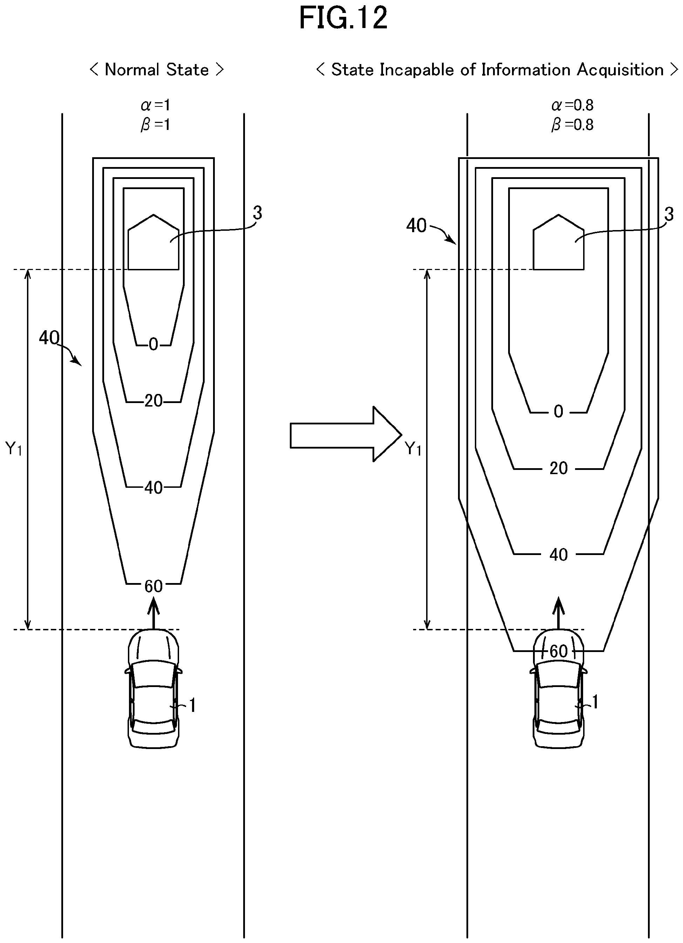

Next, with reference to FIGS. 10 to 12, the speed limit distribution setting processing to be executed in the step S12 of the flowchart illustrated in FIG. 9 will be described. FIG. 10 is a flowchart of the speed limit distribution setting processing to be executed as a subroutine of the flowchart illustrated in FIG. 9. FIG. 11 illustrates a graph showing a change in the permissible upper limit relative speed, in a situation where no information has been able to be acquired from a surrounding vehicle, and FIG. 12 illustrates a diagram showing a change in the speed limit distributions 40, in the situation where in the situation where no information has been able to be acquired from a surrounding vehicle.

First of all, in step S21 of FIG. 10, the behavior of a surrounding vehicle 3 traveling forward of the own vehicle 1 is estimated, based on the manipulation information regarding manipulations by the driver of the surrounding vehicle, acquired via the inter-vehicle communication system 26 in the step S10 of FIG. 9. As one example, when the acquired information indicates that the driver of the surrounding vehicle depresses a brake pedal by a given amount or more, it can be estimated that the driver brakes suddenly and thereby the surrounding vehicle will be rapidly decelerated. As another example, when the acquired information indicates that the driver is turning a steering wheel by a given amount or more, it can be estimated that the surrounding vehicle will turn a corner or will make a lane change. Further, when the surrounding vehicle is equipped with a vehicle control device such as a driving support device or an automatic driving device, a lane change or the like of the surrounding vehicle can be estimated from traveling course information regarding a traveling course set in the vehicle control device of the surrounding vehicle.

Here, the inter-vehicle communication system 26 is configured to repeatedly receive, from any surrounding vehicle traveling or parked around the own vehicle 1, manipulation information regarding manipulations by a driver of the surrounding vehicle, at intervals of a given time period. This time interval is sufficiently short. Thus, for example, in the event that the driver of the surrounding vehicle brakes suddenly, it is possible to detect an oncoming deceleration of the surrounding vehicle earlier than a time when the surrounding vehicle starts to be actually decelerated and this deceleration is detected by the camera 21 or the millimeter-wave radar 22. On the other hand, in a situation where no surrounding vehicle 3 equipped with the inter-vehicle communication system 26 exists within a given range from the own vehicle 1, the aforementioned manipulation information and traveling course information are not received.

In step S22, it is determined whether or not information has been acquired from a surrounding vehicle (target vehicle) traveling forward of the own vehicle 1 in the same direction as that of the own vehicle 1, via the inter-vehicle communication system 26. Here, in this embodiment, when no information has been acquired via the inter-vehicle communication system 26, and when information acquired via the inter-vehicle communication system 26 is not information from the surrounding vehicle 3 traveling forward of the own vehicle 1 in the same direction as that of the own vehicle 1, it is determined that no information has been acquired. That is, among vehicles existing around the own vehicle 1, a vehicle directly related to setting of a traveling course of the own vehicle 1 is a vehicle traveling forward of the own vehicle 1 in the same direction as that of the own vehicle 1, so that setting of the speed limit distributions 40 around this vehicle is performed while taking into account whether or not the above information has been acquired. A vehicle traveling rearward of the own vehicle 1 and a vehicle traveling in an opposing lane are not directly related to setting of the traveling course of the own vehicle 1, so that setting of the speed limit distributions 40 around each of these vehicles is performed without taking into account the presence or absence of the information acquired via the inter-vehicle communication system 26.

When no information has been acquired, the subroutine proceeds to step S23 in which each of the correction coefficients $\alpha$, $\beta$ of the formulas (1) and (2) for calculating the permissible upper limit relative speed $V_{lim}$ is changed. Here, at the time when the subroutine of the flowchart illustrated in FIG. 10 is started, default values of the correction coefficients are set as follows: $\alpha$ = 1, and $\beta$ = 1. That is, in this embodiment, as shown in the left graphs of FIG. 11, in a normal state, each of the correction coefficients $\alpha$, $\beta$ is 1, so that the permissible upper limit relative speed $V_{lim}$ quadratically increases at a given slope along with an increase in the clearance X and along with an increase in the distance Y to the surrounding vehicle.

On the other hand, when no information has been acquired from the surrounding vehicle traveling forward of the own vehicle 1 in the same direction as that of the own vehicle 1, via the inter-vehicle communication system 26, each of the correction coefficients $\alpha$, $\beta$ is changed to 0.8. Thus, as shown in the right graphs of FIG. 11, a slope at which the permissible upper limit relative speed $V_{lim}$ quadratically increases along with an increase in each of the distances X, Y is changed to become gentler. As above, the speed distribution setting part 10d operates to set the speed limit distributions 40 such that a pattern of the speed limit distributions 40 becomes different depending on whether or not the information regarding the traveling state of the surrounding vehicle 3 has been able to be acquired via the inter-vehicle communication system 26.

After setting the values of the correction coefficients $\alpha$, $\beta$ in the step S23, the subroutine in the ECU 10 proceeds to step S24. In the step S24, the speed limit distributions 40 are set based on the set values of the correction coefficients $\alpha$, $\beta$. Then, one cycle of the subroutine in the flowchart of FIG. 10 is completed, and the subroutine returns to the flowchart of the FIG. 9.

In the step S23, each of the correction coefficients $\alpha$, $\beta$ is changed to a smaller value, so that the speed limit distributions 40 set in the step S24 are changed from a pattern illustrated on the left side of FIG. 12 to a pattern illustrated on the right side of FIG. 12. That is, the speed limit distributions 40 are changed from a normal pattern ($\alpha$ =1, $\beta$ =1) illustrated on the left side of FIG. 12 to a pattern expanded bilaterally outwardly and rearwardly from the surrounding vehicle 3, as illustrated on the right side of FIG. 12. As above, when no information regarding the traveling state of the surrounding vehicle 3 traveling forward of the own vehicle 1 in the same direction as that of the own vehicle 1 has been able to be acquired, the speed limit in each of the speed limit distributions 40 is lowered.

In the example illustrated in FIG. 12, in a situation where the own vehicle 1 is traveling right behind the surrounding vehicle 3 at a position away by a distance $Y_1$, the speed limit is not applied to the own vehicle 1, in a normal state illustrated on the left side of FIG. 12. On the other hand, when each of the correction coefficients $\alpha$, $\beta$ is changed to 0.8 in response to the situation where no information has been able to be acquired from the surrounding vehicle 3, the own vehicle 1 enters inside a distribution line of the permissible upper limit relative speed "60 km/h", as illustrated on the right side of FIG. 12, so that the relative speed is limited to 60 km/h. In this way, when no information has been able to be acquired from the surrounding vehicle 3, the permissible upper limit relative speed is lowered at the same distance $Y_1$ from the surrounding vehicle 3.

As above, in this embodiment, when no information has been able to be acquired from the surrounding vehicle 3, the permissible upper limit relative speed is lowered. Thus, even when a time lag before execution of control in response to a change in the traveling state, such as deceleration, of the surrounding vehicle 3 is relatively long, it is possible to cope with deceleration of the surrounding vehicle 3 with a temporal margin. This makes it possible to reduce a feeling of insecurity to be given to a driver, e.g., when the forward surrounding vehicle 3 is decelerated.

On the other hand, when it is determined, in the step S22 of FIG. 10, that information has been acquired from the surrounding vehicle 3, the subroutine proceeds to step S24.

In the step S24, the speed limit distributions 40 are set based on the values of the correction coefficients $\alpha$, $\beta$ ($\alpha$ = 1, $\beta$ = 1) set as default values. Then, one cycle of the subroutine in the flowchart of FIG. 10 is completed, and the subroutine returns to the flowchart of the FIG. 9. In this case, the speed limit distributions 40 is set to the pattern illustrated on the left side of FIG. 12. Specifically, when information has been acquired from the surrounding vehicle 3, a time lag before execution of control in response to a change in the traveling state of the surrounding vehicle 3 is relatively short. Thus, even if a relatively high relative speed is permitted with respect to the distance Y from the surrounding vehicle 3, it is possible to cope with deceleration or the like of the surrounding vehicle 3 with a temporal margin. This makes it possible to maintain an adequate distance with respect to the forward vehicle.

In the example illustrated in FIG. 12, the forward surrounding vehicle 3 is traveling on the same lane as that of the own vehicle 1. However, with regard to a forward surrounding vehicle 3 traveling on a lane neighboring the lane of the own vehicle 1 in the same direction as that of the own vehicle 1, the correction coefficients α, β are changed based on the presence or absence of the acquired information in the same manner. Specifically, the surrounding vehicle 3 traveling on the neighboring lane is likely to make a lane change to intrude into the lane in which the own vehicle 1 is traveling. Thus, it is necessary to set the speed limit distributions 40 in a manner allowing the own vehicle 1 to cope with the lane change with a temporal margin. Such a lane change of the surrounding vehicle 3 can be estimated based on the steering angle, the traveling course information or the like of the surrounding vehicle 3, and such such information can be acquired via the inter-vehicle communication system 26 so as to quickly cope with the lane change of the surrounding vehicle 3.

In the vehicle control device 100 according to this embodiment, the speed limit distributions 40 are set such that the pattern thereof becomes different between when the information regarding the traveling state of the surrounding vehicle 3 has been able to be acquired via the inter-vehicle communication system 26 serving as the vehicle information receiving part (the left pattern in FIG. 12), and when no information regarding the traveling state of the surrounding vehicle 3 has been able to be acquired via the inter-vehicle communication system 26 (the right pattern in FIG. 12). Thus, it is possible to adequately set the distance with respect to the surrounding vehicle 3, depending on an acquisition status of the traveling state of the surrounding vehicle 3.

In the vehicle control device 100 according to this embodiment, the speed limit in the speed limit distributions 4 is lowered when no information regarding the traveling state has been able to be acquired via the inter-vehicle communication system 26 (FIG. 11), and thereby a distance between the own vehicle and the surrounding vehicle required with respect to the same relative speed is increased (FIG. 12).

In the vehicle control device 100 according to this embodiment, as the information regarding the traveling state, manipulation information regarding manipulations for acceleration/deceleration and/or steering by the driver of the surrounding vehicle 3 is received from the surrounding vehicle 3, so that it is possible to quickly cope with deceleration or the like of the surrounding vehicle 3 traveling forward of the own vehicle, and maintain an adequate distance with respect to the surrounding vehicle 3, with a temporal margin.

In the vehicle control device 100 according to this embodiment, as the information regarding the traveling information, traveling course information regarding a subsequent traveling course of the surrounding vehicle 3 is received from the surrounding vehicle 3, so that it is possible to quickly cope with lane change or the like of the surrounding vehicle 3 traveling forward of the own vehicle 1, and maintain an adequate distance with respect to the surrounding vehicle 3, with a temporal margin.

Although the present invention has been described based on a preferred embodiment thereof, it should be understood that various changes and modifications may be made therein. Particularly, in the above embodiment, when no information has been able to be acquired from the surrounding vehicle 3, both the correction coefficients α, β are changed. As one modification, the vehicle control device of the present invention may be configured such that only the correction coefficient β is changed to expand the speed limit distributions 40 in the traveling direction.

In the above embodiment, when information has been able to be acquired from the surrounding vehicle 3, the correction coefficients α, β are set, respectively, to default values (α = 1, β = 1), and when no information has been able to be acquired, the correction coefficients α, β are set, respectively, to smaller values (α = 0.8, β = 0.8). As one modification, the vehicle control device of the present invention may be configured such that, when no information has been able to be acquired, the correction coefficients α, β are set, respectively, to default values, and, when information has been able to be acquired, the correction coefficients α, β are set, respectively, to larger values.

As another modification, the vehicle control device of the present invention may be configured such that the amount of change of each of the correction coefficients is changed according to the level of information acquirable via the inter-vehicle communication system 26. In this case, for example, in a situation where only the manipulation information regarding manipulations by the driver of the surrounding vehicle 3 can be acquired via the inter-vehicle communication system 26, each of the correction coefficients α, β is increased to a first value. Further, in a situation where the traveling course information of the surrounding vehicle 3 can be acquired in addition to the manipulation information, each of the correction coefficients α, β is increased to a second value which is greater than the first value. In this case, as compared to the situation where no information can be acquired via the inter-vehicle communication system 26, in the situation where only the manipulation information can be acquired, the speed limit distributions 40 are contracted, and, in the situation where the traveling course information can be additionally acquired, the speed limit distributions 40 are further contracted.

LIST OF REFERENCE SIGNS

1: vehicle
10: vehicle control and computing unit (ECU)

10a: input processing part
10b: surrounding vehicle detection part
10c: target traveling course calculation part
10d: speed distribution setting part
10e: control part
21: camera
22: millimeter-wave radar
23: vehicle speed sensor
24: position measurement system
25: navigation system
26: inter-vehicle communication system (vehicle information receiving part)
31: engine control system
32: brake control system
33: steering control system
40: speed limit distribution
100: vehicle control device

**Claims**

1.  A vehicle control device for controlling vehicle traveling, comprising:

    a surrounding vehicle detection part configured to detect a surrounding vehicle traveling around an own vehicle;
    a vehicle information receiving part configured to receive, from the surrounding vehicle detected by the surrounding vehicle detection part, information regarding a traveling state of the detected surrounding vehicle;
    a speed distribution setting part configured to set a speed limit distribution defining a permissible upper limit relative speed, around the surrounding vehicle detected by the surrounding vehicle detection part; and
    a control part configured to control a speed and/or steering of the own vehicle to satisfy the speed limit distribution set by the speed distribution setting part,
    wherein the speed distribution setting part is configured to set the speed limit distribution such that the speed limit distribution is different for when the information regarding the traveling state of the surrounding vehicle has been able to be acquired via the vehicle information receiving part, and when no information regarding the traveling state of the surrounding vehicle has been able to be acquired via the vehicle information receiving part.

2.  The vehicle control device as recited in claim 1, wherein the speed distribution setting part is configured to lower a speed limit in the speed limit distribution, when no information regarding the traveling state of the surrounding vehicle has been able to be acquired via the vehicle information receiving part.

3.  The vehicle control device as recited in claim 1 or 2, wherein the vehicle information receiving part is configured to receive, as the information regarding the traveling state, manipulation information regarding manipulations for acceleration/deceleration and/or steering by a driver of the surrounding vehicle.

4.  The vehicle control device as recited in claim 1 or 2, wherein the vehicle information receiving part is configured to receive, as the information regarding the traveling state, traveling course information regarding a subsequent traveling course of the surrounding vehicle.

## FIG.1

| 100 | | 10 |
|---|---|---|
| 21 | camera | |
| 22 | radar | |
| 23 | vehicle speed sensor | ECU |
| 24 | position measurement system | |
| 25 | navigation system | |
| 26 | inter-vehicle communication system | |

engine control — 31

brake control — 32

steering control — 33

# FIG.2

```
        25              26
   navigation      inter-vehicle
Sensors  system    communication
                      system
```

ECU                                          10

10a
input processing part

10b                    10c
surrounding         target traveling
vehicle               course
detection part     calculation part

10d
speed distribution setting part

10e
control part

engine control system    31
brake control system     32
steering control system  33

# FIG.3

EP 3 741 639 A1

FIG.4

# FIG.5

EP 3 741 639 A1

FIG.6

# FIG.7

# FIG.8

# FIG.9

```
        ┌─────────────┐
        │    START    │
        └──────┬──────┘
               ↓
S10 ─┤  Data reading                    │
               ↓
S11 ─┤  Detection of object             │
               ↓
S12 ─┤  Setting of speed limit distribution │
               ↓
S13 ─┤  Calculation of course and speed │
               ↓
S14 ─┤  Acceleration/deceleration control and/
        or steering control             │
               ↓
        ┌─────────────┐
        │   RETURN    │
        └─────────────┘
```

# FIG.10

```
        ┌─────────────┐
        │    START    │
        └──────┬──────┘
               ↓
┌──────────────────────────┐  S21
│ Starting to receive information
│ via inter-vehicle
│ communication system      │
└──────────┬───────────────┘
           ↓
       ╱───────────╲   S22
      ╱ Has information ╲     No
     ⟨ regarding target vehicle ⟩──────────┐
      ╲ been acquired ╱                      ↓
       ╲    ?    ╱                  ┌──────────────────┐ S23
           │ Yes                    │ Changing correction
           │                        │ coefficients α, β to
           │                        │ smaller values    │
           │                        └─────────┬────────┘
           ↓←──────────────────────────────────┘
┌──────────────────┐ S24
│ Setting speed limit
│ distributions based
│ on α, β           │
└─────────┬────────┘
           ↓
     ┌─────────────┐
     │   RETURN    │
     └─────────────┘
```

# FIG.11

< Normal State >　　　　　　< State Incapable of Information Acquisition >

$$V_{lim} = \alpha \, k_1 (X - D_{X0})^2$$
$$\alpha = 1 \rightarrow \alpha = 0.8$$

$$V_{lim} = \beta \, k_2 (Y - D_{Y0})^2 / V_s$$
$$\beta = 1 \rightarrow \beta = 0.8$$

# FIG.12

< Normal State >  < State Incapable of Information Acquisition >

## INTERNATIONAL SEARCH REPORT

| International application No. |
| --- |
| PCT/JP2019/003718 |

### A. CLASSIFICATION OF SUBJECT MATTER

Int.Cl. B60W30/09(2012.01)i, B60T7/12(2006.01)i, B60I8/92(2006.01)i,
B60W40/04(2006.01)i, G08G1/09(2006.01)i, G08G1/16(2006.01)i

According to International Patent Classification (IPC) or to both national classification and IPC

### B. FIELDS SEARCHED

Minimum documentation searched (classification system followed by classification symbols)
Int.Cl. B60W10/00-50/16, B60K31/00-31/18, G08G1/00-99/00,
B62D6/00-6/10, B60T7/12-8/1769, B60I8/32-8/96,
B60R21/00-21/13, B60R21/34-21/38

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2016-38837 A (NISSAN MOTOR CO., LTD.) 22 March 2016, paragraphs [0054]-[0058], [0072]-[0073], fig. 2 (Family: none) | 1-4 |
| A | JP 2017-187844 A (DENSO CORP.) 12 October 2017, claims 1-2, paragraphs [0014], [0020]-[0029], [0064]-[0066], [0070], fig. 2 & WO 2017/170766 A1 | 1-4 |
| A | JP 2010-208583 A (TOYOTA MOTOR CORP.) 24 September 2010, claim 1, paragraphs [0006]-[0015], [0031]-[0036], [0055]-[0057] (Family: none) | 1-4 |
| A | JP 2010-173349 A (TOYOTA MOTOR CORP.) 12 August 2010, paragraphs [0011]-[0014], fig. 2 (Family: none) | 1-4 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 March 2019 (29.03.2019) | 09 April 2019 (09.04.2019) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006218935 A
- JP 2016075233 W